# EUROPEAN PATENT APPLICATION

(11) **EP 4 664 335 A1**
(43) Date of publication of application: **17.12.2025**
(21) Application number: 24181467.2
(22) Date of filing: 11.06.2024
(51) Int. Cl.: G06F 21/62, G06N 3/08, G06N 3/045, G06N 3/047

(54) **PRIVACY-PRESERVING METHOD FOR SHARING DATA**

(71) Applicant: Fondation de l'Institut de Recherche Idiap, 1920 Martigny (CH)
(72) Inventor: Henderson, James Brinton, 1234 Vessy (CH)
(74) Representative: P&TS SA (AG, Ltd.)

(57) **Abstract**

The present invention relates to a computer-implemented method for sharing a dataset while preserving privacy of the dataset, the dataset comprising a private feature *F*₁, the method comprising the steps of:
providing the dataset as input into a trained neural network,
retrieving as output of the trained neural network, a plurality of representations of the dataset,
selecting a representation among the plurality of representations,
sharing the representation,
characterized in that the trained neural network has been trained on training datasets representative of the distribution of the dataset, each training dataset comprising a training private feature corresponding to the private feature of the dataset, so that the private feature cannot be retrieved from any representation of the plurality of representations of the dataset.

The invention also relates to a system for carrying out the above method and to a method for training a neural network.

## Description

### Technical domain

The present invention concerns a privacy-preserving computer-implemented method for sharing data.

### Related art

In recent years, data privacy has emerged as a significant problem due to various interconnected factors. Firstly, there's been a notable increase in the collection of personal data, facilitated by the widespread adoption of digital technologies. From online activities to health records and financial transactions, organizations now gather vast amounts of information about individuals. Additionally, technological advancements, particularly in artificial intelligence and machine learning, have enabled organizations to derive valuable insights from these large datasets. While this has benefits for businesses and research, it also raises concerns about potential misuse or abuse of personal information.

The demand for large and specific training datasets is increasing proportionally with the complexification of artificial intelligence (Al) models which require more and more refined data to be efficient. In addition to general privacy preserving concerns, several fields of application of these Al models are critical from a personal data viewpoint. Indeed, these models are, for example, increasingly spread in health industry (including hospitals, private health service providers, loT health devices, etc.) where patient privacy is particularly important.

The large-scale gathering of training data can raise several issues.
- Re-identification: even if training data is anonymized, there's a risk that individuals can be re-identified, especially when combined with other publicly available datasets. AI models trained on seemingly anonymized data can inadvertently reveal sensitive information about individuals, such as medical conditions, financial status, or personal preferences, if not properly protected.
- Data storing: during the training process, AI models may inadvertently memorize or learn sensitive information from the training data. This could lead to data leakage, where the model exposes or inadvertently reveals details about individuals that were meant to be kept private. Data leakage can occur through model parameters, intermediate representations, or the model's outputs.
- Bias and bias propagation: training AI models with biased or unrepresentative data can perpetuate and amplify existing biases present in the training data. This can result in discriminatory outcomes, where certain groups of individuals are unfairly treated or disadvantaged.

More generally, attackers may attempt to reverse-engineer or reconstruct sensitive training data from AI models' outputs. This is known as a model inversion attack, where an adversary uses the model's predictions or outputs to infer details about the training data. Model inversion attacks pose a significant threat to privacy, especially when the training data contains sensitive or personal information.

Moreover, membership inference attacks pose another challenge. In these attacks, adversaries attempt to determine whether specific individuals were included in the training dataset based on the model's behavior. By exploiting subtle patterns or differences in the model's responses, attackers can infer whether a particular individual's data was used during training. This poses privacy risks, as it can reveal sensitive information about individuals' participation in the training dataset.

To address these privacy concerns, various privacy-preserving techniques for training AI models have been developed recently. These methods aim to minimize the risk of privacy breaches while still enabling effective model training and inference.

Differential privacy allows information about groups to be transmitted without transmitting information about individuals. It is a privacy-preserving mechanism that adds noise to query responses to prevent the inference of sensitive information about individual records. This allows for aggregate analysis while protecting individual privacy. In the context of training dataset of AI models, differential privacy consists in adding noise to the output of the model so that information about the input or information about the training data is made more difficult.

This operation of adding noise is usually context dependent as the quantity and quality of information that is to be kept private, i.e. that should not be retrievable from the output of the model, depends on the particular use of the model. Therefore, the noise is often added per se after the model has produced a representation of a dataset, causing this operation to be adapted each time to the particular output of the model. Moreover, it can be necessary to ensure afterwards that the "noised" representation satisfies a differential privacy condition.

### Short disclosure of the invention

An aim of the present invention is the provision of a privacy-preserving computer-implemented method for sharing data that overcomes the shortcomings and limitations of the state of the art.

Another aim of the invention is the provision of a privacy-preserving computer-implemented method for sharing data allowing differential privacy to be used without needing to invent bespoke noise models.

According to the invention, these aims are attained by the object of the attached claims, and especially by a computer-implemented method for sharing a dataset while preserving privacy of the dataset, the dataset comprising a private feature *F*₁, the method comprising the steps of:
providing the dataset as input into a trained neural network,
retrieving as output of the trained neural network, a plurality of representations of the dataset,
selecting a representation among the plurality of representations,
sharing the representation,
characterized in that the trained neural network has been trained on training datasets representative of the distribution of the dataset, each training dataset comprising a training private feature corresponding to the private feature of the dataset, so that the private feature cannot be retrieved from any representation of the plurality of representations of the dataset.

As a result, the method allows the generation and sharing of a representation which satisfies differential privacy, the noise model having been learned by the neural network model.

The plurality of representations may also be used as a basis for training other AI models in a way that ensures privacy of the data since these representations ensure themselves differential privacy. This guarantees that the private feature of the original dataset cannot be retrieved by the outcome of such an AI model trained on the representations.

The present method can be seen as a data anonymization method.

In an embodiment, the trained neural network may have been trained by minimizing a loss function comprising a private reward term configured for removing the training private feature from representations generated by the neural network.

The private reward term may be based on an adversarial neural network configured to extract the private feature from the representations generated by the neural network.

In an embodiment, the method satisfies a stronger differential privacy condition. More specifically, the randomized mechanism defined by the trained neural network satisfies Rényi differential privacy.

In an embodiment, each representation of the plurality of representations may be a set-of-vectors with an associated probability, each associated probability being determined by a probability distribution over the representations.

The step of selection of the representation among the plurality of representations may be based on a desired privacy level determined by its associated probability. This allows to choose a representation depending on a desired privacy level as the choice of a specific representation corresponds to a choice of a certain amount of noise with respect to the private feature of the original dataset. Therefore the step of sampling the representations can be done according to a privacy parameter that can depend for example on the type of data.

The dataset may further comprise a feature of interest *F*₂, and the training datasets may each further comprise a training feature of interest corresponding to the feature of interest so that the feature of interest can be retrieved from any representation of the plurality of representations of the dataset. This allows to guarantee that the neural network will generate representations from which the feature of interest can be retrieved or decoded.

This can be done for example by training the neural network to minimizing a loss function comprising an interest reward term configured for ensuring that the feature of interest is retrievable from the representations generated by the neural network.

The interest reward term may be based on an auxiliary neural network model configured to predict the feature of interest from representations generated by the neural network.

In an embodiment, the trained neural network can be a transformer neural network, the dataset being embedded into a set-of-vector-embedding prior to being provided into the trained neural network. The generated representations are then also set-of-vector-embeddings that may need a decoding prior to being shared.

The dataset may comprise a text file, an image file, a video file, a sound file, a data structure, a model gradient, or any combination thereof.

In an embodiment, the method may comprise a step of decoding the representation to retrieve information encoded by the representation.

The selection of the representation among the plurality of representations may be carried out by a human user or automatically by a computer.

According to the invention, these aims are also attained by a system for carrying out the computer-implemented method described above, the system comprising a memory unit configured for storing a plurality of neural network weights, a computing unit configured for generating the plurality of representations based on the dataset provided as input, and communication means for sharing the representation.

According to the invention, these aims are also attained by a computer-implemented method for training a neural network model comprising the steps of
retrieving a plurality of training datasets, each dataset being representative of the distribution of a model dataset comprising a private feature, each training dataset comprising a training private feature corresponding to the private feature of the model dataset,
training the neural network model by means of a learning algorithm by providing the plurality of training datasets as input to the model,
retrieving as output of the model a plurality of representations of the training datasets,
minimizing a loss function of the model comprising a private reward term configured to penalize the model if a training private feature can be retrieved from the plurality of representations,
update a set of weights of the neural network model based on a value of the loss function,
iterate the steps above until a threshold value of the loss function is achieved.

### Brief description of the figures

Examples of embodiments are indicated in the description which is best illustrated by means of the appended figures in which
- Fig. 1 schematically illustrates a computer-implemented method for safely sharing a dataset using a neural network.
- Fig. 2 illustrates the computer-implemented method for safely sharing a dataset using a neural network for removing a private feature from the dataset.
- Fig. 3 illustrates a computer-implemented method for safely sharing a dataset using a neural network for removing a private feature from the dataset and for ensuring to keep a feature of interest in the dataset.
- Fig. 4 illustrates a computer-implemented method for training a neural network model.

### Examples of embodiments of the present invention

The method of the present invention relates to digital privacy-preserving data sharing between a first and a second entity. Typically, one wants to share a dataset which includes a private feature *F*₁, which is to be kept secret to the second entity, while information about the rest of the dataset should be available to or at least retrievable by the second entity. Privacy-preserving is therefore to be understood as the possibility for the first entity to choose not to share the private feature with the second entity.

For example, the dataset may consist in a collection of patient health records that are to be used for training an AI model to detect patterns. As mentioned above, it is desirable that the AI model trained on these data cannot be used to infer private features from the health records such as names, personal information, etc. Other typical examples include datasets comprising bank information, ID information or any kind of personal information that one may not want to be publicly available.

The expression "dataset" is to be understood in a wide sense. A dataset can be any kind of digital data, organized or not, such as text, images, sounds, video, raw data, data structure, etc. A dataset can be a single file or a collection of files, structured or not, etc.

The expression "first and second entity" can relate to humans or computers, depending on particular embodiments. Typically, the sharing of the data can be specifically operated by a user (human) or automatically executed by a computer. The first and second entities can be the same entity.

As explained above, differential privacy is a privacy-preserving method for sharing data relying on the principle of adding noise to a dataset so that specific private information is "hidden" in the noise, while important information is still retrievable from the noised dataset. For each private information or feature, a specific model of noise has to be determined to achieve privacy.

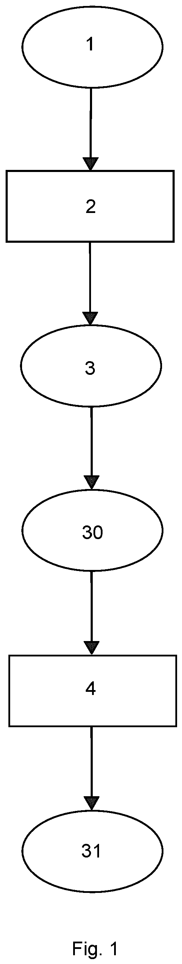

As schematically illustrated in Fig. 1, the present method proposes to use a trained neural network 2 to obtain a plurality of representations 3 of the dataset 1 to be shared in such a way that the private feature is not retrievable from the representations, therefore ensuring privacy, while important information remains retrievable. The representations thus obtained using the trained neural network are therefore a noised versions of the original dataset. In this sense, the noise model is determined by the training of neural network itself. The first entity can then select a particular representation 30 among all representations 3 produced by the neural network 2 and share it with the second entity using communication means 4. Each particular shared representation 3 will then correspond to a noisy version of the original dataset 1 with a given level of privacy determined by the amount of noise.

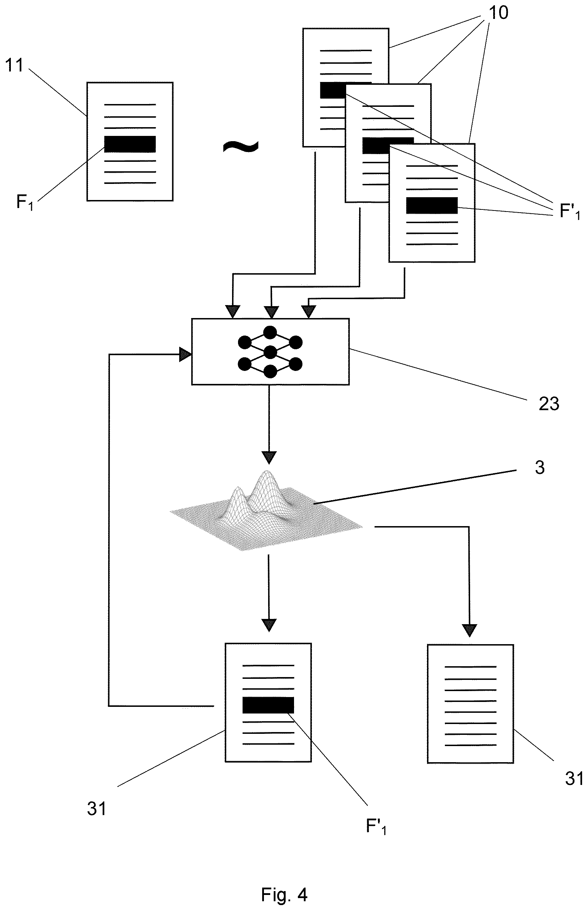

As illustrated in Fig. 4, the training of the neural network is done on training datasets 10 representative of the distribution of the dataset 1 that is intended to be shared. This means that the training datasets 10 have to contain training private features similar to the private feature of the dataset 1 that is to be shared so that the neural network 2 can learn which features have to be removed and which are to be kept for building the representation. Training can be done with two standard objectives, one which promotes retaining as little information as possible (i.e. the regularizer), and one which promotes retaining the information needed to reconstruct the datapoint. By adding a third kind of objective to the training, more or less information will be retained about specific aspects of the dataset (features that are private or not).

In a particular embodiment, the loss-function used for training the neural network comprises a private reward term configured for removing the training private feature from representations generated by the neural network. By setting the strength of this objective, variable privacy level can be achieved. Indeed, if a strong weight is accorded to this reward term, the generated representation will be noisier around the private feature so that a higher level of privacy is achieved. Conversely, if the weight accorded to the private reward term is limited, then the generated representations 3 will be less noisy around the private feature so that a low level of privacy is achieved.

This reward term can correspond to subtraction of the reward from an adversarial model which tries to extract the private information from the generated representations. Accordingly, the neural network will learn to forget the training private features.

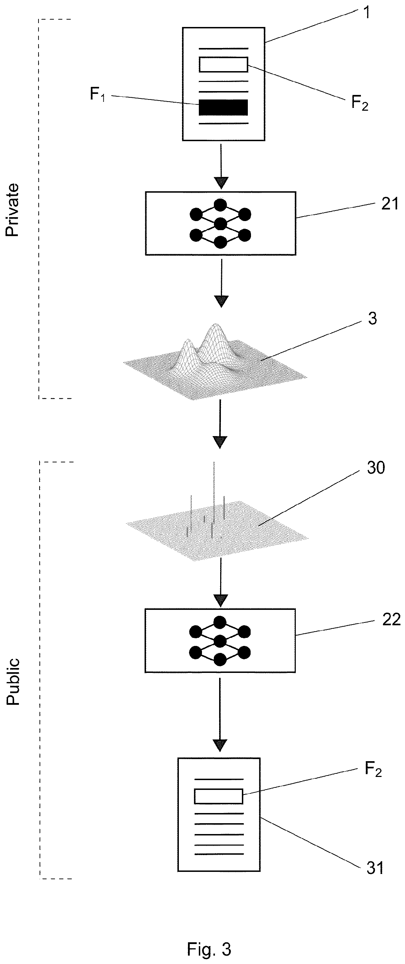

As illustrated in Fig. 3, a similar learning process can be used to ensure that a feature of interest *F*₂ can be retrievable from the generated representations 3. As in the case of the private feature, in order for the noise model learned by the neural network 2 to guarantee that this feature of interest is available from the generated representation 3, the training of the network has to be done on training dataset that have a similar or same distribution as the original dataset. In other words, the training datasets have to include training features of interest that match the feature of interest *F*₂.

Hence, in a particular embodiment, the trained neural network 2 has been trained by minimizing a loss function comprising an interest reward term configured for ensuring that the feature of interest is retrievable from the representations 3 generated by the neural network 2.

For example, the interest reward term can be based on an auxiliary neural network model configured to predict the feature of interest from representations 3 generated by the neural network. Accordingly, the neural network will learn to keep (or reconstruct) the feature of interest in the generated representations.

In an embodiment, the trained neural network satisfies a Rényi differential privacy condition which is a particular kind of differential privacy. More precisely, the randomized mechanism defined by the trained neural network which takes as input a dataset and outputs a plurality of representations according to a particular noised distribution satisfies the definition of the Rényi differential privacy as disclosed in the document MIRONOV ILYA, "Rényi Differential Privacy", Proceedings of IEEE 30th Computer Security Foundations Symposium CSF 2017, pages 263-275, IEEE, Aug 2017.

In one embodiment, the dataset is first embedded into a set-of-vectors embedding. This operation can typically be performed by a dedicated embedding model which takes the dataset as input and produces as output a set-of-vectors embedding that can be effectively treated by the trained neural network.

In an embodiment, the dataset 1 is input into a neural network 2 such as a transformer for producing a set-of-vectors embedding. Then, this set-of-vectors embedding is input into the trained neural network which generates as output the plurality of noised representations 3 which are in this case a plurality of noised embedded sets-of-vectors. Finally one or more particular representation(s) 30 are selected and shared to the second entity.

According to this main embodiment, each representation of the plurality of representations is a set-of-vectors with an associated probability, each associated probability being determined by a probability distribution over the representations. Each set-of-vectors is itself a plurality of vectors. Since it is associated with a probability distribution function, the sum of all probabilities across all the set-of-vectors is equal to 1.

Therefore, the output of the neural network can be seen as a distribution over a set-of-vectors, in the sense that each representation of the plurality of representation is a set-of-vectors with associated probability. Advantageously, this allows some flexibility in regard of the number of tokens in the dataset input in the neural network. Indeed, even if tokens can be set to have a fixed known length (for example n) or size, the number of tokens (for example m) is usually unknown prior to having the particular dataset itself. Therefore, in this embodiment, each representation can consist of a matrix of m vectors with length n, that is an mxn matrix, or in other words, a set-of-vectors.

As an example of this embodiment, one can consider the case where the dataset comprises multiple text sentences which are to be shared without exposing a private feature appearing in the text.

First, a neural network model 23, such as an encoder 21 (or transformer), which, given a sentence, outputs a distribution 3 over sets-of-vectors, is trained on training datasets 10. This distribution is a set-of-vectors plus a specification of noise around that set-of-vectors. When sampling from this distribution, a set-of-vectors which is similar to the output set-of-vectors is obtained, but is different enough so that the feature cannot be reliable extracted from the sample. This training step is illustrated in Fig. 4.

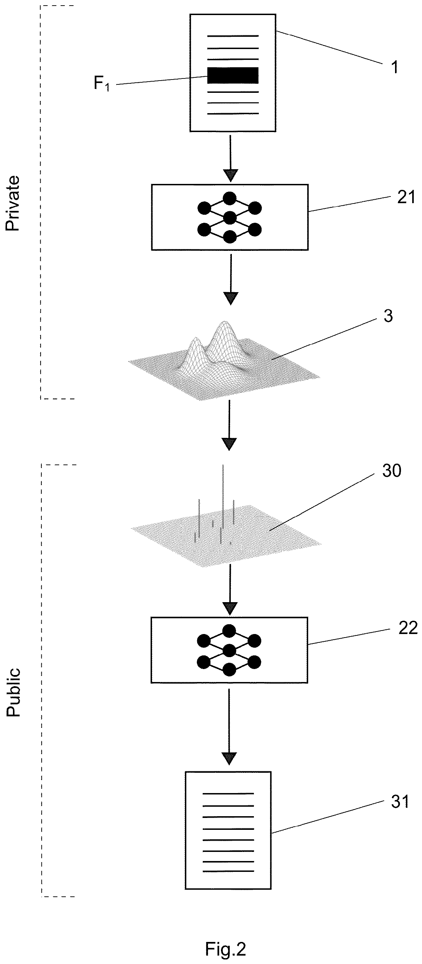

The reference numeral 21 refers to the particular case in which the neural network 2 is an encoder. Therefore, Figures 2 and 3 illustrate this particular case, however, they are exemplary and do not constitute any limitation of the architecture that can be used for the neural network 2.

This neural network is trained for example with supervised learning with two objectives. The first objective is that another neural network such as for example a transformer (trained at the same time) can reconstruct the input sentence given a sample from the output distribution. The second objective is that a third neural network, such as for example a transformer (trained at the same time) cannot predict the feature F given a sample from the output distribution. These two objectives cannot be completely satisfied at the same time, so training finds a compromise which preserves as much information about the sentence as possible without including information about.

As illustrated in Fig. 2, after the neural network model has been trained, for each sentence in the dataset 1 to be shared, the sentence is input into the trained neural network, which is typically an encoder 21, a distribution 3 over sets-of-vectors is obtained as output. A set-of-vectors 30 is then sampled from this output distribution. Alternatively, a random number of sets-of-vectors is sampled. The distribution can be any probability distribution, typically a Dirichlet or Gaussian distribution, but it can also be any other suitable probability distribution chosen by the skilled person.

Sampling can be done by first choosing a number of vectors in the set-of-vectors, then sampling that many vectors, and then sampling real-valued weights for each vector and concatenating each weight with its respective vector.

Last, all the sampled sets-of-vectors are collected, one (or more, or less) for each sentence in the dataset and this collection of sets-of-vectors is shared using communication means.

A typical implementation of this method involves the sharing of medical data that can be used for research purposes. It is obviously desirable that various data gathered from several patients can be used to infer patterns of a pathology in order to be able to predict an evolution or to establish the cause (e.g. a specific gene) of a disease. However, for data privacy reasons, various information contained in the original data should not be readable from the shared data, but cannot be simply removed because they still provide useful information about the data themselves. For example, the exact age of the patients may be a private information allowing to recover the identity of the patient if given per se, however it is still valuable for result to know approximately the age of the patients. In this case, the present method allows to make the network learn a noise model by providing it training datasets with a distribution of ages which is similar to the dataset that is to be analysed with the constraint that the exact age should not be retrievable from the output. As a result the trained model will be able to output representations of the dataset of interest in which the age distribution is noisy without to actually build an explicit noise model from scratch.

As illustrated in Fig. 2 and 3, the method can comprise an optional step of reconstruction or decoding of the selected representation 30 before sharing it, e.g. by means of a decoder network 22. Indeed, it may be advantageous to share a readable dataset 31 instead of the raw selected representation 30 which can be a set-of-vectors embedding necessitating a decoder to be transformed back into a dataset which has similar structure than the original dataset. Therefore, the selected representation 3 can be input into a decoder 22 to produce a dataset to be shared 31.

The step of selecting the representation 30 among the plurality of representations 3 can be performed according to a desired privacy-level. This selection step can therefore be operated according to a privacy level parameter that can be predetermined. This step can be carried out by a human user or automatically by a computer.

The sharing includes any type of digital communication means allowing to send the selected representation(s) 30 to the second entity. This can mean that the selected representations 30 are first stored on a memory unit before being shared. The sharing can occur instantly on request from the first and/or second entity, but can also occur later in time.

The sharing can be performed by displaying the selected representation(s) 30 to the second entity on the same computer that performed the previous method steps and/or to another computer after having been sent by communication means 4. In other words, the sharing of the representation(s) 30 is to be understood as the broadest form of digital sharing between two entities that can be humans or computers, and that can be the same entity or different entities.

According to one aspect, the present invention also relates to a system for carrying out the described method. This system comprises a memory unit which is configured for storing the trained neural network model (typically a set of neural network weights), a computing unit configured for generating the plurality of representations based on the original dataset which is provided as input.

Suitable computing units comprise :
- CPU and Graphic processors, GPU
- Field-programmable logic devices, FPGA
- Custom microchips, application-specific integrated circuits, ASICs, or systems on a chip, Soc
- Digital signal processors, DSP
- SIMD Processor arrays and systolic arrays, Vector or SIMD Coprocessor, Neurochips
- Neuromorphic computing units
- Intelligence Processing Unit (IPU)

The system also comprises communication means 4 for sharing the representation 30. This includes any type of computer-to-computer communication channel.

According to one aspect, the present invention also relates to a computer-implemented method for training a neural network model 23. All aspects related to the training of the neural network model presented above can apply to the training method.

As illustrated in Fig. 4, during the first step of this training method, a plurality of training datasets 10 are retrieved. Each training dataset 10 is representative of the distribution of a model dataset 11 which includes a private feature in the sense described above. This means that each training dataset 10 comprises a training private feature having the same characteristics as the private feature of the model dataset 11. In Fig. 4, the similar distribution of the model dataset 11 and the training datasets 10 is represented by the symbol "-".

In a second step, these training datasets 10 are then used as the training corpus of a learning algorithm to train the neural network model 23, e.g. a supervised, unsupervised and/or reinforcement learning algorithm.

In a third step, a plurality of representations 3 of the training datasets 10 are retrieved as outputs of the model 23 and used to minimize a loss function of the model which comprises a private reward term configured to penalize the model if a training private feature can be retrieved from the generated representations.

As explained before, this can be for example achieved by subtracting reward from an adversarial model which tries to extract the private information from the generated representations.

These training steps are performed iteratively until the loss function is minimized, i.e. until a threshold value has been achieved. This value typically corresponds to the output by the model 23 of a plurality of representations 3 from which the training private feature cannot be retrieved. This is illustrated in Fig. 4 by the dataset 31 which could be shared as explained above. In some embodiments, a decoding step could be necessary to decode the representations 3, however, such a step in not illustrated in Fig. 4.

### List of reference numerals

- 1: Dataset
- 10: Training dataset
- 11: Model dataset
- 2: Neural network
- 21: Encoder
- 22: Decoder
- 23: Neural network model
- 3: Plurality of representations
- 30: Representation
- 31: Shared representation
- *F*₁: Private feature
- *F*'₁: Training private feature
- *F*₂: Feature of interest

## Claims

1. Computer-implemented method for sharing a dataset (1) while preserving privacy of the dataset, the dataset (1) comprising a private feature (*F*₁), the method comprising the steps of:
providing the dataset (1) as input into a trained neural network (2),
retrieving as output of the trained neural network, a plurality of representations (3) of the dataset (1),
selecting a representation (30) among the plurality of representations (3),
sharing the representation (30),
**characterized in that** the trained neural network (2) has been trained on training datasets representative of the distribution of the dataset (1), each training dataset comprising a training private feature corresponding to the private feature (*F*₁) of the dataset, so that the private feature cannot be retrieved from any representation of the plurality of representations (3) of the dataset.

2. Method according to claim 1, the trained neural network (2) having been trained by minimizing a loss function comprising a private reward term configured for removing the training private feature from representations generated by the neural network.

3. Method according to claim 2, the private reward term being based on an adversarial neural network configured to extract the private feature from the representations generated by the neural network.

4. Method according any of the preceding claims, the randomized mechanism defined by the trained neural network has Rényi differential privacy.

5. Method according to any of the preceding claims, each representation of the plurality of representations (3) being a set-of-vectors with an associated probability, each associated probability being determined by a probability distribution over the representations.

6. Method according to the preceding claim, the selection of the representation (30) among the plurality of representations (3) being based on a desired privacy level determined by its associated probability.

7. Method according to any of the preceding claims, the dataset (1) further comprising a feature of interest (*F*₂), the training datasets further comprising a training feature of interest corresponding to the feature of interest so that the feature of interest (*F*₂) can be retrieved from any representation (30) of the plurality of representations (3) of the dataset.

8. Method according to the preceding claim, the trained neural network (2) having been trained by minimizing a loss function comprising an interest reward term configured for ensuring that the feature of interest (*F*₂) is retrievable from the plurality of representations (3) generated by the neural network (2).

9. Method according to the preceding claim, the interest reward term being based on an auxiliary neural network model configured to predict the feature of interest (*F*₂) from representations generated by the neural network (2).

10. Method according to any of the preceding claims, the trained neural (2) network being a transformer neural network, the dataset (1) being embedded into a set-of-vector-embedding prior to being provided into the trained neural network.

11. Method according to any of the preceding claims, the dataset (1) comprising a text file, an image file, a video file, a sound file, a data structure, a model gradient, or any combination thereof.

12. Method according to any of the preceding claims, further comprising a step of decoding the representation (30) to retrieve information encoded by the representation.

13. Method according to any of the preceding claims, the selection of the representation (30) among the plurality of representations (3) being carried out by a human user or automatically by a computer.

14. System for carrying out the computer-implemented method of the claims 1-13, comprising a memory unit configured for storing a plurality of neural network weights, a computing unit configured for generating the plurality of representations (3) based on the dataset (1) provided as input, and communication means for sharing the representation.

15. Computer-implemented method for training a neural network model (23) comprising the steps of
retrieving a plurality of training datasets (10), each training dataset being representative of the distribution of a model dataset (11) comprising a private feature (*F*₁), each training dataset comprising a training private feature (*F*'₁) corresponding to the private feature (*F*₁) of the model dataset (11),
training the neural network model (23) by means of a learning algorithm by providing the plurality of training datasets (10) as input to the model (23),
retrieving as output of the model a plurality of representations (3) of the training datasets (10),
minimizing a loss function of the model (23) comprising a private reward term configured to penalize the model if a training private feature (*F*'₁) can be retrieved from any one of the plurality of representations (3),
update a set of weights of the neural network model based on a value of the loss function,
iterate the steps above until a threshold value of the loss function is achieved.
